# EUROPEAN PATENT APPLICATION

(11) **EP 3 859 145 A1**
(43) Date of publication of application: **04.08.2021**
(21) Application number: 20216749.0
(22) Date of filing: 22.12.2020
(51) Int. Cl.: F03D 7/02, F03D 7/04

(54) **SYSTEMS AND METHODS FOR MODEL BASED WIND TURBINE DIAGNOSTICS**

(30) Priority: 30.01.2020 US 202016776968
(71) Applicant: Honeywell International Inc., Charlotte, NC 28202 (US)
(72) Inventor: MAHONEY, Timothy D., Charlotte, NC North Carolina 28202 (US); SHAO, Qingqiu G., Charlotte, NC North Carolina 28202 (US); DONG, Bin, Charlotte, NC North Carolina 28202 (US); LI, Dan, Charlotte, NC North Carolina 28202 (US); BARTON, Bradley John, Charlotte, NC North Carolina 28202 (US); LUDVIK, Martin, Charlotte, NC North Carolina 28202 (US); LIBIS, Zdenek, Charlotte, NC North Carolina 28202 (US)
(74) Representative: Dowling, Andrew

(57) **Abstract**

Systems and methods are disclosed for providing model-based diagnostics and analytics for wind turbine generators. Methods comprise: obtaining design data of one or more wind turbines, the design data including one or combinations of failure modes and effects analysis, diagrams/schematics for mechanical, electrical, hydraulic, and pneumatic systems, software logic diagrams, Interface Control Diagrams, component failure rates, a net list, fault codes, troubleshooting manuals, and/or component costs; and generating a wind turbine model based on the design data by: generating relationship models based on the FMEAs, the component failure rates, and/or the component costs; generating sub-system models based on the diagrams/schematics for mechanical, electrical, hydraulic, and pneumatic systems, the software logic diagrams, and/or the ICDs; and logically integrating the sub-system models and the relationship models to form the wind turbine model.

## Description

### TECHNICAL FIELD

Various embodiments of the present disclosure relate generally to the field of wind turbine diagnostics and analytics and, more particularly, to systems and methods for providing model-based diagnostics and analytics for wind turbine generators.

### BACKGROUND

Wind turbines (sometimes referred to "wind turbine generators" or "WTGs") are generally operated automatically by complex and integrated electronic controls, sensors, actuations systems, and power management systems. As a result, thousands of failure modes occurring within the wind turbine systems often render the wind turbines inoperable or result in reduced capabilities. In an effort to detect and identify failure modes as they occur, special sensors and built-in test and diagnostic features are incorporated into the wind turbines.

However, incorporating the sensors and designing diagnostic features into the wind turbines can pose many challenges. For example, a wind turbine diagnostic design may have failure mode-to-symptom relationships that could overlap multiple instances and have cascading effects across the expansive wind turbine systems. The overlapping relationships and cascading effects can cause significant ambiguity during a failure mode troubleshooting process. Ambiguity encountered while troubleshooting for wind turbine failure modes can increase time consumption and lead to inaccurate and inefficient corrective actions. Further, wind turbine diagnostic designs can span across multiple and disparate design artifacts. Thus, conventional wind turbine diagnostic designs make troubleshooting difficult for wind turbine engineers to assess and trace failure modes with consistency and accuracy. Moreover, errors and gaps could be introduced to the wind turbine diagnostic designs which increase time consumption and inaccuracies for performing troubleshooting by the wind turbine field technicians.

The present disclosure is directed to overcoming one or more of these above-referenced challenges. The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods are disclosed for providing model-based diagnostics and analytics for wind turbine generators.

In one embodiment, a method is disclosed for generating a model for wind turbine diagnostics. The method may comprise: obtaining design data of one or more wind turbines, the design data including one or combinations of (1) failure modes and effects analysis (FMEAs), (2) diagrams/schematics for mechanical, electrical, hydraulic, and pneumatic systems, (3) software logic diagrams, (4) Interface Control Diagrams (ICDs), (5) component failure rates, (6) a net list, (7) fault codes, (8) troubleshooting manuals, and/or (9) component costs; and generating a wind turbine model based on the design data, wherein the generating the wind turbine model includes: generating relationship models based on the FMEAs, the component failure rates, and/or the component costs; generating sub-system models based on the diagrams/schematics for mechanical, electrical, hydraulic, and pneumatic systems, the software logic diagrams, and/or the ICDs; and logically integrating the sub-system models and the relationship models to form the wind turbine model.

In accordance with another embodiment, a method is disclosed for wind turbine diagnostics. The method may comprise: obtaining a wind turbine model; receiving live data from one or more wind turbines; executing a diagnostic reasoning program using the wind turbine model to detect a fault condition based on the live data; based on the detected fault condition, generating solution information; transmitting the solution information to a maintenance entity; and initiating a learning loop process to update the wind turbine model based on the live data and the solution information.

In accordance with another embodiment, a method is disclosed for engineering analysis of wind turbines, comprising: obtaining a wind turbine model; receiving a design request; in response to the design request including a compile request, identifying design conflicts and errors, if any, based on the wind turbine model and reporting; in response to the design request including a tracing request, identifying traced relationships based on the wind turbine model and reporting; in response to the design request including a validation request for changes, identifying design conflicts, if any, of the changes based on the wind turbine model and reporting; and in response to the design request including an engineering data request, generating engineering content based on the wind turbine model and reporting.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an overview of an example environment in which systems, methods, and other aspects of the present disclosure may be implemented.
FIG. 2 depicts a block diagram schematically showing an example of a process for generating wind turbine generator models, according to one or more embodiments.
FIG. 3 depicts a diagram illustrating an exemplary wind turbine generator diagnostic process, according to one or more embodiments.
FIG. 4 depicts an exemplary view of an interface of a wind turbine generator diagnostic browser, according to one or more embodiments.
FIG. 5 depicts a flowchart of an exemplary method for generating a model for wind turbine generator diagnostics, according to one or more embodiments.
FIG. 6 depicts a flowchart of an exemplary process for wind turbine generator diagnostics, according to one or more embodiments.
FIG. 7 depicts a flowchart of an exemplary process for wind turbine generator engineering analysis, according to one or more embodiments.
FIG. 8 depicts a computer system according to one or more embodiments.

### DETAILED DESCRIPTION OF EMBODIMENTS

The following embodiments describe systems and methods for performing a model-based diagnostic process for wind turbines. As described above, overlapping instances and cascading effects in a wind turbine diagnostic design may cause ambiguity during failure mode troubleshooting. Further, assessing the wind turbine diagnostic design for consistency and accuracy may be difficult due to multiple and disparate design artifacts in the wind turbine diagnostic design. As such, a need exists for a wind turbine diagnostic system or process that reduces or eliminates ambiguities and improve consistency and accuracy during wind turbine troubleshooting.

Accordingly, the following embodiments describe systems and methods for providing a model-based diagnostic process for wind turbines. According to aspects of the present disclosure, a diagnostic reference model may be built by a diagnostic model system for the wind turbines. The diagnostic reference model may establish relationships between overlapping failure modes-to-symptoms and respective corrective actions corresponding to potential failures in an easily identifiable manner. The diagnostic reference model may also allow establishing interconnections of components and interfaces, as well as the flows of power, signals, and data of the wind turbines easily and efficiently. As such, the diagnostic reference model may allow the cascading effects of the failure modes of the wind turbines to be easily identified and evaluated in order to reduce or eliminate ambiguities between multiple symptoms and observations.

Further, the model development system may allow importing various design artifacts and parsing them into a model development database. In addition, the model development system may provide a series of stored or received rules and procedures for executing the design artifacts. The model development system may also establish relationships between entities of the design artifacts and cascading relationships of the failure modes across the wind turbines. Component failure rates and repair costs related to the wind turbines may also be provided in the model development system for establishing ranking systems and determining a likelihood of success for troubleshooting steps and corrective actions. The model development system may also include various analysis, visualization, and reporting features that allow a user to assess fault coverage, run consistency checks, and trace end-to-end connectivity of symptoms and failure modes. Furthermore, a diagnostic reasoning application may be provided to execute a directed and interactive troubleshooting process based on the diagnostic reference model. The results of the troubleshooting steps taken and the corrective actions performed may be provided to the model development system in a learning loop. The learning loop may allow the diagnostic reference model to be updated automatically with the latest diagnostic information. As such, the diagnostic reference model, the model development system, and the diagnostic reasoning application may reduce or eliminate ambiguities and improve consistency and accuracy in wind turbine diagnostics.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The term "or" is meant to be inclusive and means either, any, several, or all of the listed items. The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. Relative terms, such as, "substantially" and "generally," are used to indicate a possible variation of ± 10% of a stated or understood value.

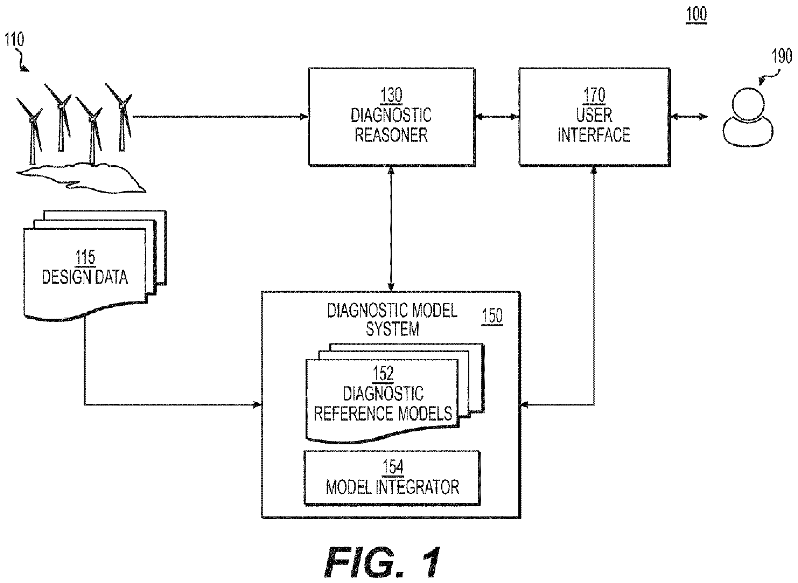

Referring now to the appended drawings, FIG. 1 shows an overview of an example environment 100, according to one or more embodiments of the present disclosure. The environment 100 may include, for example, wind turbines 110, wind turbine design data ("design data") 115, a diagnostic model system 150, a diagnostic reasoner 130, a user interface 170, and a user 190. The wind turbines 110 may include, for example, a yaw system, a pitch system, a nacelle controller, a generator, and any other systems and components that may be provided for generating electricity by the wind turbines 110.

The design data 115 may include wiring diagrams, system diagrams, failure modes and effects analysis (FMEAs), test procedures, bill of materials (BOM) parts, net lists of components, diagrams and schematics for mechanical, electrical, hydraulic, and pneumatic systems, software logic diagrams, Interface Control Diagrams (ICDs), component failure rates, component costs, fault code lists, troubleshooting manuals, and any other data relating to the systems and components that may be provided for generating electricity by the wind turbines 110.

The diagnostic model system 150 may include diagnostic reference models 152 and a model integrator 154. The diagnostic model system 150 may receive the design data 115 that may be generated before or after the development phase of the wind turbines 110. The design data 115 may be generated by any entity with information relating to the development of the wind turbines 110. The model integrator 154 may generate the diagnostic reference models 152 based on the design data 115, as described further below. The diagnostic model system 150 may modify the diagnostic reference models 152 and provide different configurations of the diagnostic reference models 152 based on design revisions, platform versions, and platform variations. Further, the diagnostic model system 150 may output the diagnostic reference models 152, for example, as loadable diagnostic image (LDI) files.

The diagnostic reasoner 130 may be a run-time application that may be executed on the user interface 170 as a web application or any other application suitable for running on the user interface 170. The user interface 170 may be, for example, a server, a laptop, a mobile device, or any other device used for performing diagnostics for the wind turbines 110. The diagnostic reasoner 130 may comprise diagnostic reasoning software that may be configured for any type of the user interface 170 for the wind turbines 110. The diagnostic reasoner 130 may receive diagnostic signals (e.g., alarms, alerts, indicators, customer complaints, and/or other observations on the wind turbines 110) generated from the wind turbines 110 or any other entity monitoring the wind turbines 110. The diagnostic reasoner 130 may also receive diagnostic reference models 152 as LDI files from the diagnostic model system 150. The diagnostic reasoner 130 may provide troubleshooting procedures to the user interface 170 to guide the user 190 in performing directed diagnostics based on the received diagnostic signals and the diagnostic reference models 152. The user 190 may be a technician, a customer, an engineer, or any other entity monitoring or managing the wind turbines 110.

The diagnostic reasoner 130 may apply the received diagnostic signals from the wind turbines 110 to the diagnostic reference models 152 to generate a fault condition that may identify potential failure modes, symptoms, or tests for determining the root cause of the diagnostic signals generated by the wind turbines 110. Further, the diagnostic reasoner 130 may provide, on the user interface 170, guided steps to the user 190 for troubleshooting the cause of the diagnostic signal generated by the wind turbines 110. The diagnostic reasoner 130 may provide, for example, potential corrective actions with an indication of likelihood of success to the user 190 on the user interface 170. The diagnostic reasoner 130 may then provide, in a learning loop, the results of the troubleshooting and the steps taken by the user 190 for troubleshooting to the diagnostic model system 150. The learning loop may update the statistical probability data for troubleshooting the diagnostic signals in the diagnostic reference models 152.

As indicated above, FIG. 1 is provided merely as an example. Other examples are possible and may differ from what was described with regard to FIG. 1. The number and arrangement of systems and networks shown in FIG. 1 are provided as an example. In practice, there may be additional devices, fewer devices and/or networks, different devices and/or networks, or differently arranged devices and/or networks than those shown in FIG. 1. Furthermore, two or more systems or devices shown in FIG. 1 (e.g., the diagnostic reasoner 130 and the user interface 170) may be implemented within a single device, or a single system or device shown in FIG. 1 (e.g., the diagnostic model system 150, diagnostic reasoner 130, or the interface 170) may be implemented as multiple, distributed devices. Additionally, or alternatively, a set of devices (e.g., one or more devices) of environment 100 may perform one or more functions described as being performed by another set of devices of environment 100.

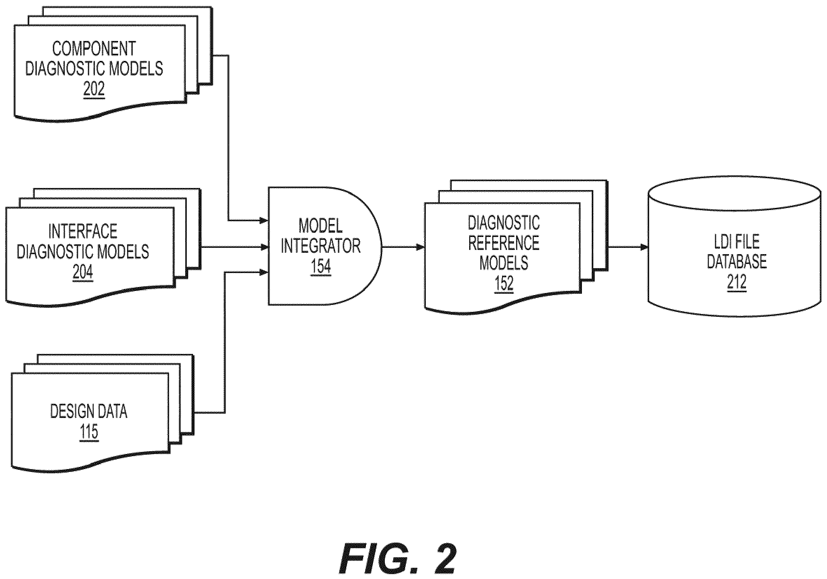

FIG. 2 depicts a block diagram schematically showing an example process for generating the diagnostic reference models 152 and LDI files in the diagnostic model system 150, according to one or more embodiments. As shown in FIG. 2, the diagnostic model system 150 may generate component diagnostic models 202 based at least on the FMEAs in the design data 115. The FMEAs may be received as part of the design data 115 or may be received separately from any entity capable of generating the FMEAs for the wind turbines 110. The FMEAs may be, for example, in a spreadsheet file format (e.g., XLS file) or an Extensible Markup Language (XML) format. The diagnostic model system 150 may generate the component diagnostic models 202 by translating the FMEAs into model data in the format of the diagnostic model system 150 scheme. The diagnostic model system 150 may translate the FMEAs by automatically executing database scripts. The component diagnostic models 202 may include, for example, mappings of relationships between various fault modes, corrective actions, and the wind turbines 110 components. For example, a power supply, or any other component, of the wind turbines 110 may be mapped to a health indicator, a failure mode, capability, symptoms, corrective actions, test data, test result data, or any other failure diagnostic information of the wind turbines 110.

The diagnostic model system 150 may also generate interface diagnostic models 204 based at least on the net lists of components ("net lists") in the design data 115. The net lists may be, for example, in a spreadsheet file format (e.g., XLS file) or an XML format. The net lists may be received as part of the design data 115 or may be received separately from any entity capable of generating the net lists for the wind turbines 110. The net lists may include, for example, assembly lists, interface lists, connection lists, and any other additional net lists describing the relationships of the wind turbines 110 components. The assembly lists may include, for example, lists of the wind turbines 110 components. The interface lists may include lists of connectors for the wind turbines 110 components. The connection lists may include, for example, a list of attributes of the connections between the wind turbines 110 components. The additional net lists may include, for example, lists of other connection arraignment information for the wind turbines 110 components. The diagnostic model system 150 may generate the interface diagnostic models 204 by translating the net lists into model data in the format of the diagnostic model system 150 scheme. The diagnostic model system 150 may translate the net lists by automatically executing database scripts.

The diagnostic model system 150 may also translate any additional data in the design data 115 that may be necessary to generate the diagnostic reference models 152. For example, the diagnostic model system 150 may translate the fault code lists and the troubleshooting manuals in the design data 115. The fault code lists may be, for example, in a spreadsheet file format (e.g., XLS file) or an XML format. The troubleshooting manuals may be, for example, in a spreadsheet file, (e.g., XLS file), an image file, Portable Document Format (PDF) file, a Word file, or other suitable file. The fault code lists may include lists of fault codes associated with the wind turbines 110 components, and the troubleshooting manuals may include instructions and procedures for troubleshooting any detected fault modes. The fault code lists and the troubleshooting manuals may be received as part of the design data 115 or may be received separately from any entity capable of generating the fault code lists and the troubleshooting manuals for the wind turbines 110. The diagnostic model system 150 may translate the fault codes and the troubleshooting manuals into model data in the format of the diagnostic model system 150 scheme. The diagnostic model system 150 may translate the fault codes and the troubleshooting manuals by automatically executing database scripts.

The model integrator 154 in the diagnostic model system 150 may then integrate the translated FMEAs, net lists, fault code lists, and the troubleshooting manuals. The model integrator 154 may be one or more processors for integrating the translated FMEAs, net lists, fault code lists, and the troubleshooting manuals into the diagnostic reference models 152. During integration, the model integrator 154 may perform occurrence expansion with the translated FMEAs and the translated netlists. That is, the model integrator 154 may copy the FMEAs data in the model data format of the wind turbines 110 scheme to the net list data in the same model data format of the wind turbines 110 scheme to generate an expanded model. The model integrator 154 may then connect the fault code lists and map the troubleshooting manuals to the expanded model. The model integrator 154 may also perform cascade calculations by determining the propagation of faults through the diagnostic reference models 152 generated from the expanded mode, the fault code lists, and the trouble shooting manuals.

As shown in FIG. 2, the diagnostic model system 150 may convert the diagnostic reference models 152 into LDI files and store them in the LDI file database 212. The LDI files in the database 212 may be transmitted by the diagnostic model system 150 to the diagnostic reasoner 150 shown in FIG. 1. In an embodiment, the LDI files may be retrieved from the database 212 by the user 190 or the diagnostic reasoner 130 upon request. The database 212 may be located in the diagnostic model system or on a server or a cloud network.

In another embodiment, the diagnostic model system 150 may generate design engineering reports (or reporting) based on the diagnostic reference models 152. The diagnostic model system 150 may identify design conflicts and errors when generating the diagnostic reference models 152. For example, the diagnostic model system 150 may provide a model development tool in the form of a model browser or a graphic editor for identifying the design conflicts and errors during the design stage of the wind turbines 110. A wind turbine design engineer may then correct the identified design conflicts and errors by using the model development tool. The diagnostic model system 150 may also trace design relationship across the systems, components, subsystems, and design artifacts of the wind turbines 110 and provide them in the model browser or the graphic editor for the design engineer. The wind turbine design engineer may then make changes to the displayed traces in the model browser or the graphic editor that may affect relationships between the systems, components, subsystems, and design artifacts across all of the wind turbines 110. The diagnostic model system 150 may also provide integrated engineering data source for performing maintenance and service manuals and diagnostic tools.

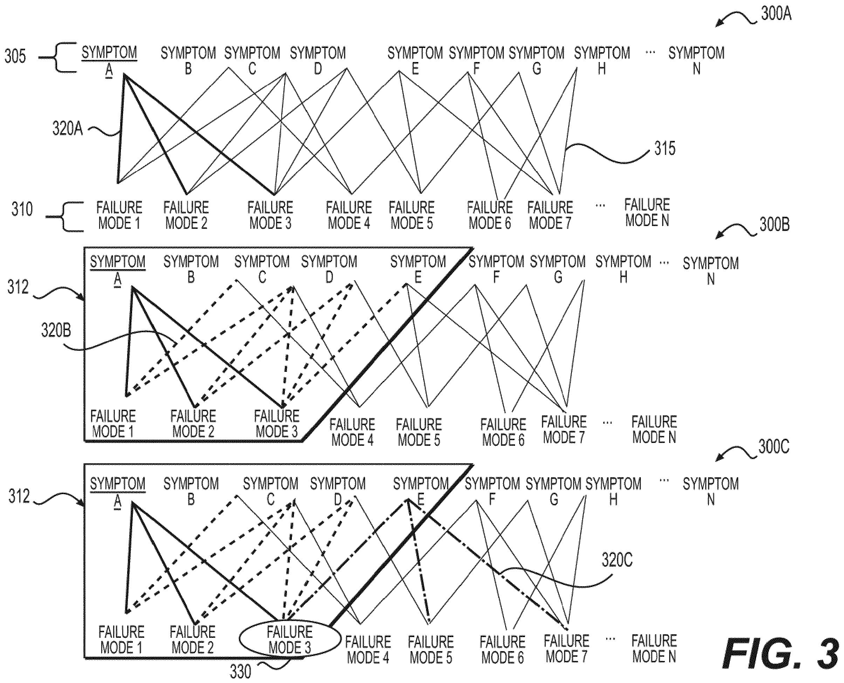

FIG. 3 shows a diagram illustrating a diagnostic process performed by the diagnostic reasoner 130 based on the diagnostic reference models 152. The diagnostic reference models 152 may include failure mode-to-symptom (FS) relationships. The FS relationships may include Symptoms 305 (e.g., Symptom A-N) and corresponding Failure Modes 310 (e.g., Failure Mode 1-N) of the wind turbines 110. Symptoms 305 may be, for example, alarms, alerts, indicators, customer complaints, and/or observations of operational activities of the wind turbines 110. Failure Modes 310 may be potential problems related to mechanical, electrical, structural, or any other conditions at the wind turbines 110. In the diagnostic reference models 152, Symptoms 305 may be associated with Failure Modes 310, for example, according inter-relationships 315 as shown in FIG. 3. The diagnostic reasoner 130 may refer to the inter-relationships 315 to generate troubleshooting procedures that may guide the user 190, via the user interface 170, to isolate and determine a likely failure mode at the wind turbines 110.

In an exemplary embodiment, the diagnostic reasoner 130 may receive a diagnostic signal corresponding to Symptom A at the wind turbines 110 during instance 330 A. The diagnostic signal may be generated from the wind turbines 110 or any other entity monitoring or managing the wind turbines 110. The diagnostic reasoner 130 may determine Symptom A to correspond to Failure Modes 1-3 based on the inter-relationships 315 provided by the diagnostic reference models 152. Accordingly, the diagnostic reasoner 130 may determine potential corrective actions for failure modes 1-3 and transmit the corrective actions to the user 190 for troubleshooting the wind turbines 110 based on Failure Modes 1-3.

In another exemplary embodiment, the diagnostic reasoner 130 may receive a diagnostic signal corresponding to Symptom A at the wind turbines 110 during instance 300B. During instance 300B, the diagnostic reasoner 130 may establish a fault condition envelop 312 around only the symptoms and failure modes that correspond to Symptom A. For example, Symptom A may only correspond to Failure Mode 1-3. However, Failure Mode 1 may correspond to Symptom A-C, Failure Mode 2 may correspond to Symptom A, Symptom C, and Symptom D, and Failure Mode 3 may correspond to Symptom A, Symptom C, Symptom D, and Symptom E based on the inter-relationships 315. As such, the fault condition envelop 312 may be established around Symptoms A-E and Failure Modes 1-3 to isolate Failure Modes 310 and reduce ambiguity.

Once the fault condition envelop 312 is established by the diagnostic reasoner 130, any additional diagnostic signal corresponding to Symptoms 305 may help to further isolate Fault Modes 310 to determine a likely fault condition at the wind turbines 110. For example, at instance 300c, the diagnostic reasoner 130 may receive an additional Symptom E after receiving Symptom A. Symptom E may correspond to Failure Mode 3, 5, and 7. However, since the fault condition envelop 312 only includes Failure Mode 1-3, the diagnostic reasoner 130 may determine Failure Mode 3, which correspond to both Symptom A and Symptom E, to be the likely failure mode at the wind turbines 110 based on the diagnostic signals indicating Symptom A and E.

FIG. 3 shows Symptom 305, Failure Modes 310, the inter-relationships 315, and the fault condition envelop 312 as exemplary embodiments. Any combination of symptoms and failure modes may be provided in the diagnostic reference models 152. Further, any alternative inter-relationships and fault condition envelops may be generated by the diagnostic model system 150 according to the design data of the wind turbines 110.

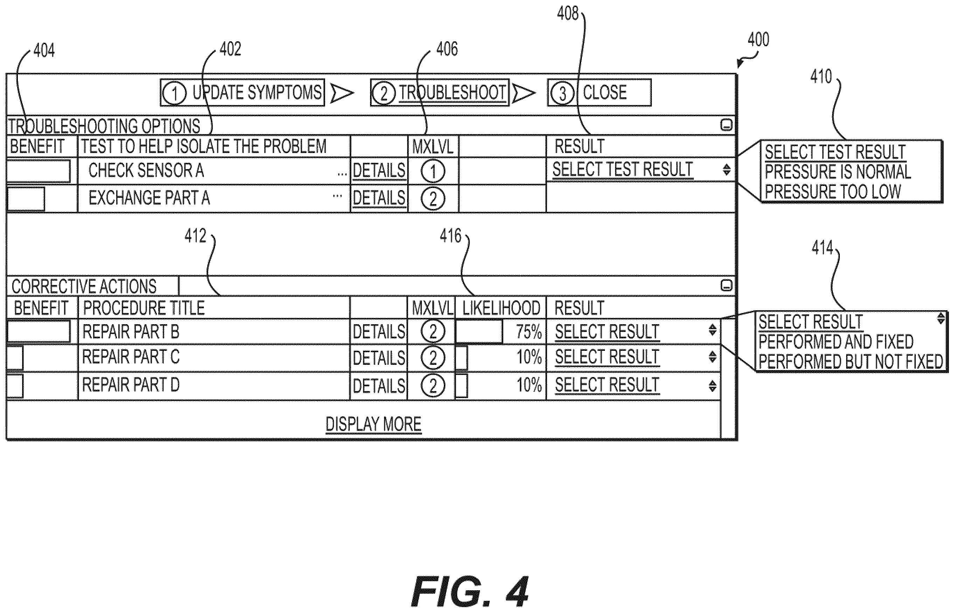

FIG. 4 shows an exemplary view of a wind turbine diagnostic browser 400 ("diagnostic browser") for providing guided troubleshooting procedures to isolate potential failure modes. The diagnostic reasoner 130 may provide the diagnostic browser 400 to the user 190 via the user interface 170. The diagnostic browser 400 may include, for example, troubleshooting options with a test field 402 indicating a list of tests for isolating failure modes of the wind turbines 110. The diagnostic browser 400 may also include a benefit field 404, a maintenance level field 406, and a result field 408. The benefit field 404 may rank and provide a level of benefit for performing each of the tests indicated in the test field 402. For example, checking Sensor A may be more beneficial than exchanging Part A for isolating the problems that may occur at the wind turbines 110. The benefit field 404 may indicate a cost benefit derived from the diagnostic reference models 152. In an embodiment, the longest bar may be the recommended procedure to execute first and to have the best chance of minimizing cost to complete the repair. However, the user 190 may be free to pick any procedure to troubleshoot or take corrective actions based on knowledge and experience.

The maintenance level field 406 may indicate the maintenance level at which a test indicated in the diagnostic test field 402 may be performed by. Once the test indicated in the test field 402 is performed by the indicated maintenance level, or any other entity capable of performing the test, the user 190 may update the result field 408 by making an appropriate selection for the result of the test. An expanded result field 410 may provide options for selecting the result of the test that. For example, when the user 190 performs a test for checking Sensor A, which may be a pressure sensor, the user 190 may select either "pressure is normal" or "pressure is too low." Based on the test result selected for the result field 408 by the user 190, the diagnostic reasoner 130 may update potential corrective actions indicated in the diagnostic browser 400 for isolating and resolving the reported problems at the wind turbines 110.

The diagnostic browser 400 may provide a list of repair procedures in a procedure field 412. The diagnostic browser 400 may also provide a likelihood field 416, listing rankings of the likelihood of resolving the problem or issue reported at the wind turbines 110 if the listed repair procedures in the procedure field 412 are performed. For example, if the user 190, or any other entity capable of performing the repairs listed in the procedure field 412, performs the repair for Part B, the likelihood of resolving the issue or problem at the wind turbines 110 would be 75%. However, the likelihood of the resolving the issue or problem at the wind turbines 110 would only be 10% if Part C were to be repaired. Further, upon performing the corrective actions or repairs, the user 190 may enter the result of the corrective actions or repairs. The diagnostic browser 410 may provide expanded result field 414 that may display options for the user 190 to selection. For example, the expanded result field may display the selections labeled "performed and fixed" and "performed but not fixed." The diagnostic reasoner 130 may then update the troubleshooting options and the corrective actions in the diagnostic browser 400. Further, the result of the corrective actions and the history of troubleshooting steps taken by the user 190 may be transmitted back to the diagnostic model system as a learning loop to update the diagnostic reference models 152 for future troubleshooting.

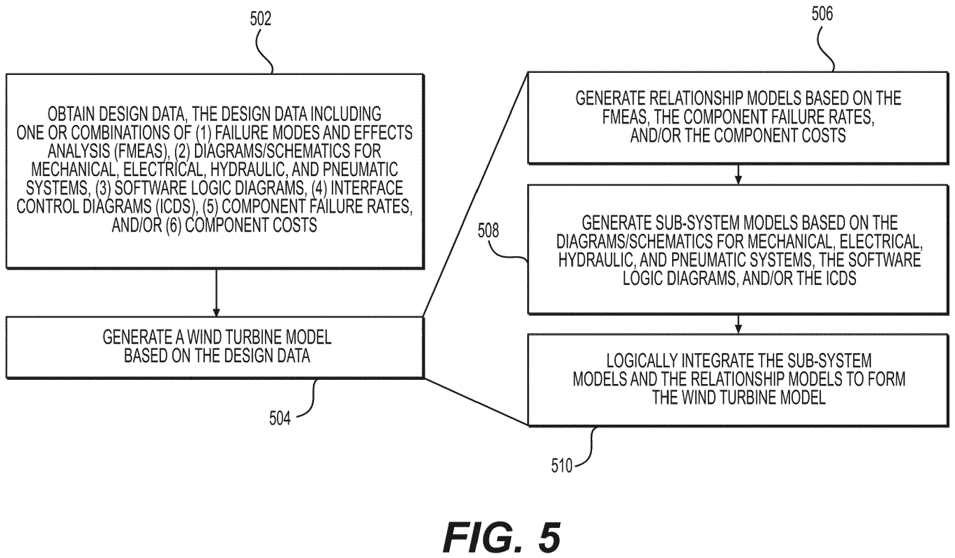

FIG. 5 depicts a flowchart of an exemplary method for generating a model for wind turbine generator diagnostics, according to one aspect of the present disclosure. As shown in FIG. 5, at step 502, the diagnostic model system 150 may obtain design data from the wind turbines 110 or any other entity capable of generating design data related to the wind turbines 110. The design data may include one or combinations of (1) failure modes and effects analysis (FMEAs), (2) diagrams/schematics for mechanical, electrical, hydraulic, and pneumatic systems, (3) software logic diagrams, (4) Interface Control Diagrams (ICDs), (5) component failure rates, (6) a net list, (7) fault codes, (8) troubleshooting manuals, and/or (9) component costs. The diagrams/schematics for mechanical, electrical, hydraulic, and pneumatic systems, the software logic diagrams, and/or the ICDs may include diagrams/schematics for a turbine, a blade structure, a rotor, a generator, a yaw drive system, a turbine controller, and a pitch system. One or more sub-system models based on the diagrams/schematics for mechanical, electrical, hydraulic, and pneumatic systems, the software logic diagrams, and/or the ICDs may be generated by the diagnostic model system 150 by translating the net list into the first format. The translated net list may include a component assembly list, an interface list, and/or a connection list for the diagrams/schematics for mechanical, electrical, hydraulic, and pneumatic systems, the software logic diagrams, and/or the ICDs of the wind turbines 110.

At step 504, the diagnostic model system 150 may generate a wind turbine model based on the design data. As shown in FIG. 5, the diagnostic model system 150 may generate relationship models based on the FMEAs, the component failure rates, and/or the component costs, at step 506. The relationship models may be generated by translating the FMEAs into a first format, the translated FMEAs including relationships between symptoms-to-failure modes and corrective actions. The FMEAs may be translated into model data in the format of the diagnostic model system 150 scheme. The FMEAs may be received as part of the design data 115 or may be received separately from the design data 115 from any entity capable of generating FMEAs for the wind turbines 110.

At step 508, the diagnostic model system 150 may generate sub-system models based on the diagrams/schematics for mechanical, electrical, hydraulic, and pneumatic systems, the software logic diagrams, and/or the ICDs. The sub-system may be generated by translating net lists including the diagrams/schematics for mechanical, electrical, hydraulic, and pneumatic systems, the software logic diagrams, and/or the ICDs into model data in the format of the diagnostic model system 150 scheme. At step 510, the diagnostic model system 150 may logically integrate the sub-system models and the relationship models to form the wind turbine model. The sub-system models and the relationship models may be logically integrated by generating an expanded model of the sub-system models and the relationship models.

The expanded model may establish relationships between the symptoms-to-failure modes and the corrective actions from the translated FMEAs and the component assembly list, the interface list, and/or the connection list from the translated net list by copying the data in the relationship models in the model data format of the wind turbines 110 scheme to the data in the sub-system models in the same model data format of the wind turbines 110 scheme. The expanded model may also establish relationships between the fault codes and the expanded model and map the troubleshooting manuals to the expanded model. The diagnostic model system 150 may then generate a loadable diagnostic image (LDI) file of the wind turbine model for transmitting the LDI file to the diagnostic reasoning program (e.g., the diagnostic reasoner 130). The diagnostic model system 150 may also receive troubleshooting data from the user 190 via the diagnostic reasoner 130 and may logically integrate the troubleshooting data with the wind turbine model to form an updated wind turbine model to improve the statistical probability data for the wind turbine model.

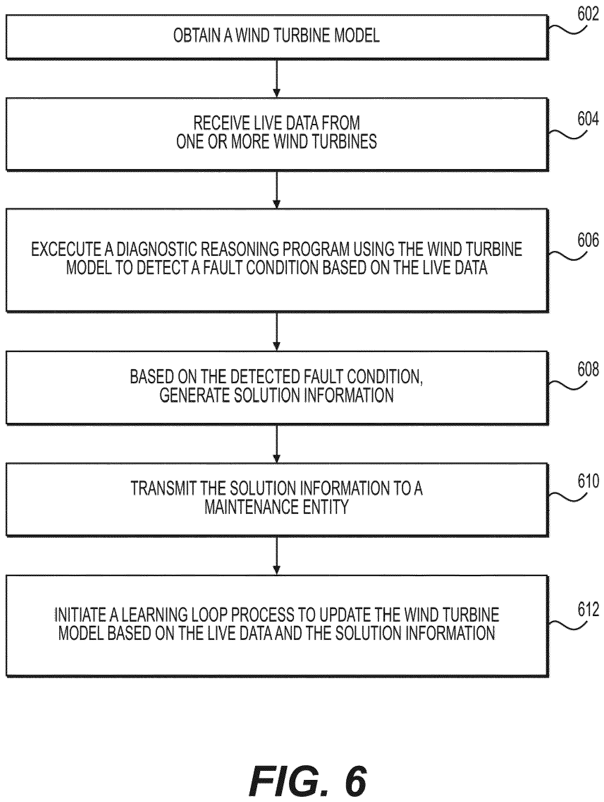

FIG. 6 depicts a flowchart of an exemplary method for processing wind turbine generator diagnostics, according to one aspect of the present disclosure. At step 602, the diagnostic reasoner 130 may obtain a wind turbine model. The diagnostic reasoner 130 may obtain the wind turbine model from the wind turbines 110, the diagnostic model system 150, or any other system that generates or stores wind turbine models. At step 604, the diagnostic reasoner 130 may receive live data from one or more wind turbines. The live data may be received from the wind turbines 110 or any other system that monitors or manages the wind turbines 110 and generates data related to the condition or status of the wind turbines 110. The wind turbine model may be in the form of a loadable diagnostic image (LDI) file.

At step 606, the diagnostic reasoner 130 may execute a diagnostic reasoning program using the wind turbine model to detect a fault condition or mode based on the live data. The diagnostic reasoning program may be a run time application or a browser executed on an interface of a server or a client device, or any other interface designed to perform diagnostics for the wind turbines 110. The diagnostic reasoner 130 may configure the diagnostic reasoning program to be in a format that is compatible with the user interface 170 based on the LDI file of the wind turbine model. At step 608, the diagnostic reasoner 130 may generate solution information based on the detected fault condition. The solution information may include reasoning data for establishing relationships between potential symptoms and fault conditions or modes of the one or more wind turbines. The diagnostic reasoner 130 may generate ranked troubleshooting steps of possible solutions based on the relationships between the potential symptoms and the fault conditions or modes as part of the solution information.

At step 610, the diagnostic reasoner 130 may transmit the solution information to a maintenance entity. The maintenance entity may be a technician, a customer, an engineer, or any other user monitoring or managing the wind turbines 110. The diagnostic reasoner 130 may provide the ranked troubleshooting steps to the maintenance entity based on the live data and the solution information. The diagnostic reasoner 130 may then receive, via the user interface 170, a request for a corrective action from the maintenance entity based on the ranked troubleshooting steps, and generate updated troubleshooting steps based on the request for the corrective action. The diagnostic reasoner 130 may then determine whether the fault condition has been resolved based on a result of the corrective action taken at the one or more wind turbines.

At step 612, the diagnostic reasoner 130 may initiate a learning loop process to update the wind turbine model based on the live data and the solution information. The diagnostic reasoner 130 may, upon determining the fault condition has been resolved, initiate or perform the learning loop process by transmitting the request for the corrective action and result of the corrective action to the wind turbines 110. The learning loop may update the statistical probability data for troubleshooting the diagnostic signals in the diagnostic reference models 152.

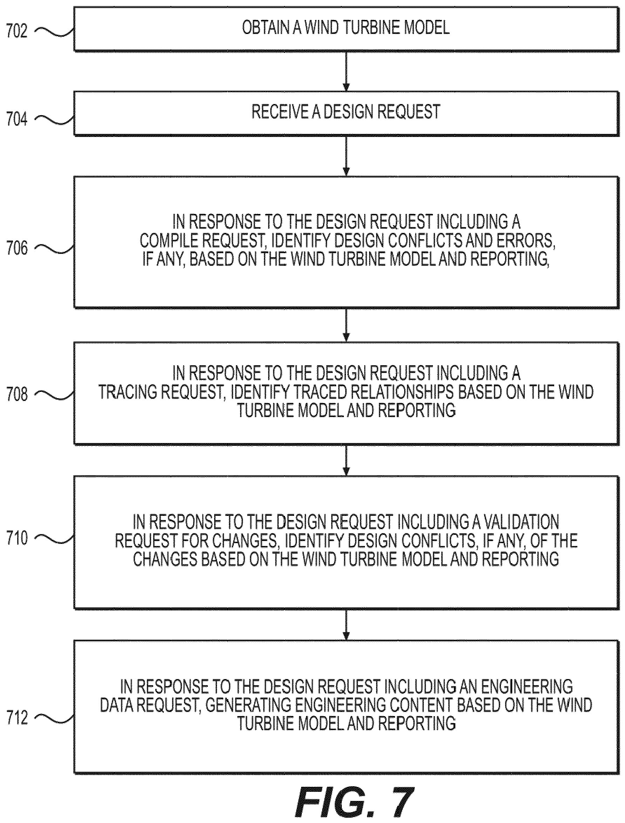

FIG. 7 depicts a flowchart of an exemplary method for processing engineering analysis of wind turbines, according to one aspect of the present disclosure. At step 702, the diagnostic model system 105 may obtain a wind turbine model. The wind turbine model may be obtained by generating the wind turbine model from the design data of the wind turbines 110 or may be received from any entity capable of providing a wind turbine model. At step 704, the diagnostic model system 150 may receive a design request. The design request may be received from a wind turbine diagnostic model design engineer. At step 706, in response to receiving the design request including a compile request, the diagnostic model system 150 may identify design conflicts and errors, if any, based on the wind turbine model and reporting. The diagnostic model system 150 may generate an updated wind turbine model based on the design request if no design conflicts and errors are identified.

At step 708, in response to receiving the design request including a tracing request, the diagnostic model system 150 may identify traced relationships based on the wind turbine model and reporting. The diagnostic model system 150 may display an integrated schematic view of the traced relationships and the design conflicts and detect any changes in the traced relationships. The diagnostic model system 150 may also display a grid editor for mapping relationships between entities of the wind turbine model based on the design request. The diagnostic model system 150 may also receive identifying design information, establish relationships between the identifying design information and the wind turbine model based on predetermined procedures, and generate cascading failure modes of the wind turbine model based on the relationships between the identifying design information and the wind turbine model. The diagnostic model system 150 may then include the detected changes in the design request.

At step 710, in response to receiving the design request including a validation request for changes, the diagnostic model system 150 may identify design conflicts, if any, of the changes based on the wind turbine model and reporting.

At step 712, in response to the design request including an engineering data request, the diagnostic model system 150 may generate engineering content based on the wind turbine model and reporting. The diagnostic model system 150 may generating a loadable diagnostic image (LDI) file of the wind turbine model and transmit the LDI file to a diagnostic reasoning program upon generating the updated wind turbine model based on the design request.

In general, any process discussed in this disclosure that is understood to be computer-implementable, such as the processes shown in FIGS. 2, 3, and 5-7 and the systems and/or interfaces described in connection with FIGS. 1 and 4, may be performed or otherwise implemented by one or more processors of a computer system, such as the diagnostic model system 150, the diagnostic reasoner 130, and the user interface 170, as described above. A process or process step performed by one or more processors may also be referred to as an operation. The one or more processors may be configured to perform such processes by having access to instructions (e.g., software or computer-readable code) that, when executed by the one or more processors, cause the one or more processors to perform the processes. The instructions may be stored in a memory of the computer system. A processor may be a central processing unit (CPU), a graphics processing unit (GPU), or another type of processing unit.

A computer system, such as the diagnostic model system 150, the diagnostic reasoner 130, the user interface 170, or any other system performing operation functions of the wind turbines 110, may include one or more computing devices. If the one or more processors of the computer system are implemented as a plurality of processors, the plurality of processors may be included in a single computing device or distributed among a plurality of computing devices. If a computer system comprises a plurality of computing devices, the memory of the computer system may include the respective memory of each computing device of the plurality of computing devices.

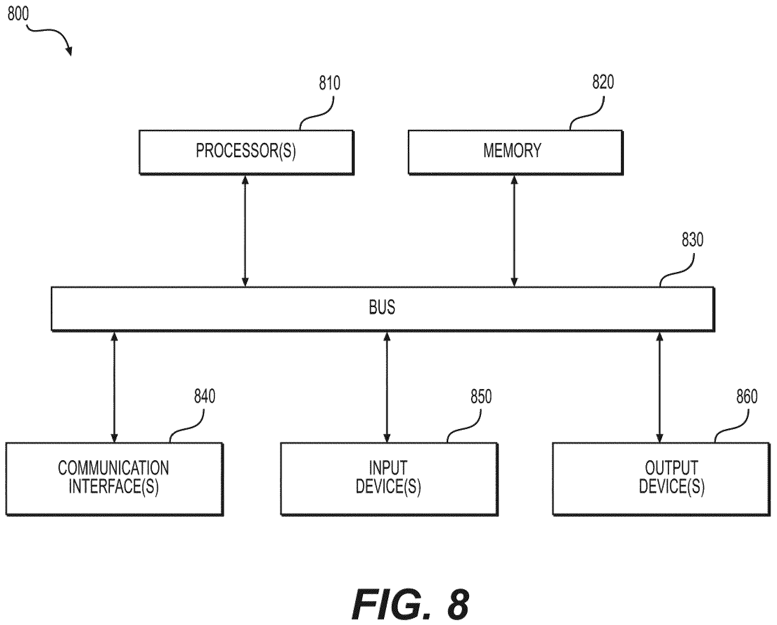

FIG. 8 illustrates an example of a computing device 800 of a computer system. The computing device 800 may include processor(s) 810 (e.g., CPU, GPU, or other processing unit), a memory 820, and communication interface(s) 540 (e.g., a network interface) to communicate with other devices. Memory 820 may include volatile memory, such as RAM, and/or non-volatile memory, such as ROM and storage media. Examples of storage media include solid-state storage media (e.g., solid state drives and/or removable flash memory), optical storage media (e.g., optical discs), and/or magnetic storage media (e.g., hard disk drives). The aforementioned instructions (e.g., software or computer-readable code) may be stored in any volatile and/or non-volatile memory component of memory 820. The computing device 800 may, in some embodiments, further include input device(s) 850 (e.g., a keyboard, mouse, or touchscreen) and output device(s) 860 (e.g., a display, printer). For example, if the user interface 170 may be embodied as a tablet computer. The user interface 170 may have a touchscreen and a display. The aforementioned elements of the computing device 800 may be connected to one another through a bus 830, which represents one or more busses. In some embodiments, the processor(s) 810 of the computing device 800 includes both a CPU and a GPU.

Instructions executable by one or more processors may be stored on a non-transitory computer-readable medium. Therefore, whenever a computer-implemented method is described in this disclosure, this disclosure shall also be understood as describing a non-transitory computer-readable medium storing instructions that, when executed by one or more processors, configure and/or cause the one or more processors to perform the computer-implemented method. Examples of non-transitory computer-readable medium include RAM, ROM, solid-state storage media (e.g., solid state drives), optical storage media (e.g., optical discs), and magnetic storage media (e.g., hard disk drives). A non-transitory computer-readable medium may be part of the memory of a computer system or separate from any computer system.

It should be appreciated that in the above description of exemplary embodiments, various features are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this disclosure.

Furthermore, while some embodiments described herein include some but not other features included in other embodiments, combinations of features of different embodiments are meant to be within the scope of the disclosure, and form different embodiments, as would be understood by those skilled in the art. For example, in the following claims, any of the claimed embodiments can be used in any combination.

Thus, while certain embodiments have been described, those skilled in the art will recognize that other and further modifications may be made thereto without departing from the spirit of the disclosure, and it is intended to claim all such changes and modifications as falling within the scope of the disclosure. For example, functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted.

## Claims

1. A method for generating a model for wind turbine diagnostics, comprising:
obtaining design data of one or more wind turbines, the design data including one or combinations of (1) failure modes and effects analysis (FMEAs), (2) diagrams/schematics for mechanical, electrical, hydraulic, and pneumatic systems, (3) software logic diagrams, (4) Interface Control Diagrams (ICDs), (5) component failure rates, (6) a net list, (7) fault codes, (8) troubleshooting manuals, and/or (9) component costs; and
generating a wind turbine model based on the design data, wherein the generating the wind turbine model includes:
generating relationship models based on the FMEAs, the component failure rates, and/or the component costs;
generating sub-system models based on the diagrams/schematics for mechanical, electrical, hydraulic, and pneumatic systems, the software logic diagrams, and/or the ICDs; and
logically integrating the sub-system models and the relationship models to form the wind turbine model.

2. The method according to claim 1, wherein the generating relationship models based on the FMEAs, the component failure rates, and/or the component costs includes:
translating the FMEAs into a first format, the translated FMEAs including relationships between symptoms-to-failure modes and corrective actions.

3. The method according to claim 2, wherein the diagrams/schematics for mechanical, electrical, hydraulic, and pneumatic systems, the software logic diagrams, and/or the ICDs includes diagrams/schematics for a turbine, a blade structure, a rotor, a generator, a yaw drive system, a turbine controller, and a pitch system, and wherein the generating the sub-system models based on the diagrams/schematics for mechanical, electrical, hydraulic, and pneumatic systems, the software logic diagrams, and/or the ICDs includes:
translating the net list into the first format, the translated net list including a component assembly list, an interface list, and/or a connection list for the diagrams/schematics for mechanical, electrical, hydraulic, and pneumatic systems, the software logic diagrams, and/or the ICDs.

4. The method according to claim 3, the logically integrating the sub-system models and the relationship models to form the wind turbine model includes:
generating an expanded model by establishing relationships between the symptoms-to-failure modes and the corrective actions from the translated FMEAs and the component assembly list, the interface list, and/or the connection list from the translated net list.

5. The method according to claim 4, the logically integrating the sub-system models and the relationship models to form the wind turbine model further includes:
establishing relationships between the fault codes and the expanded model; and
mapping the troubleshooting manuals to the expanded model.

6. The method according to claim 1, generating the wind turbine model based on the design data further includes:
receiving troubleshooting data; and
logically integrating the troubleshooting data with the wind turbine model to form an updated wind turbine model.

7. The method according to claim 1, further comprising:
generating a loadable diagnostic image (LDI) file of the wind turbine model; and
transmitting the LDI file to a diagnostic reasoning program.

8. A method for wind turbine diagnostics, comprising:
obtaining a wind turbine model;
receiving live data from one or more wind turbines;
executing a diagnostic reasoning program using the wind turbine model to detect a fault condition based on the live data;
based on the detected fault condition, generating solution information;
transmitting the solution information to a maintenance entity; and
initiating a learning loop process to update the wind turbine model based on the live data and the solution information.

9. The method according to claim 8, wherein the wind turbine model includes a loadable diagnostic image (LDI) file, and the method further comprises:
configuring the diagnostic reasoning program into a compatible format based on the LDI file of the wind turbine model,
wherein the solution information comprises reasoning data for establishing relationships between potential symptoms and fault conditions of the one or more wind turbines,
wherein the diagnostic reasoning program is a run time application executed on a server or a client device, and
wherein the generating solution information includes:
generating ranked troubleshooting steps of possible solutions based on the relationships between the potential symptoms and the fault conditions.

10. The method according to claim 9, further comprising:
providing the ranked troubleshooting steps to the maintenance entity based on the live data and the solution information;
receiving a request for a corrective action from the maintenance entity based on the ranked troubleshooting steps;
determining whether the fault condition has been resolved based on a result of the corrective action taken at the one or more wind turbines; and
upon determining the fault condition has been resolved, performing the learning loop process by transmitting the request for the corrective action and the result of the corrective action to a wind turbine model generating system.

11. The method according to claim 9, further comprising:
receiving a request for a corrective action from the maintenance entity based on the ranked troubleshooting steps; and
generating updated troubleshooting steps based on the request for the corrective action.

12. A method for engineering analysis of wind turbines, comprising:
obtaining a wind turbine model;
receiving a design request;
in response to the design request including a compile request, identifying design conflicts and errors, if any, based on the wind turbine model and reporting;
in response to the design request including a tracing request, identifying traced relationships based on the wind turbine model and reporting;
in response to the design request including a validation request for changes, identifying design conflicts, if any, of the changes based on the wind turbine model and reporting; and
in response to the design request including an engineering data request, generating engineering content based on the wind turbine model and reporting.

13. The method according to claim 12, wherein the identifying design conflicts and errors, if any, based on the wind turbine model includes:
upon determining an absence of the design conflicts, generating an updated wind turbine model based on the design request.

14. The method according to claim 13, further comprising:
upon generating the updated wind turbine model based on the design request, generating a loadable diagnostic image (LDI) file of the wind turbine model; and
transmitting the LDI file to a diagnostic reasoning program.

15. The method according to claim 15, further comprising:
displaying an integrated schematic view of the traced relationships and the design conflicts;
detecting changes in the traced relationships;
displaying a grid editor for mapping relationships between entities of the wind turbine model based on the design request;
detecting changes in the relationships between the entities;
including the changes in the design request;
receiving identifying design information;
establishing relationships between the identifying design information and the wind turbine model based on predetermined procedures; and
generating cascading failure modes of the wind turbine model based on the relationships between the identifying design information and the wind turbine model.
